# EUROPÄISCHE PATENTANMELDUNG

(11) **EP 1 862 818 A1**
(43) Veröffentlichungstag der Anmeldung: **05.12.2007**
(21) Anmeldenummer: 07009379.4
(22) Anmeldetag: 10.05.2007
(51) Int. Cl.: G01S 13/00

(54) **Verfahren und Vorrichtung zur relativen Positions- und Zeitbestimmung für bewegte Objekte aufgrund von Ein- und Zweiwegmessungen**

(30) Priorität: 29.05.2006 DE 102006025250
(71) Anmelder: Astrium GmbH, 81663 München (DE)
(72) Erfinder: Rang, Tanja, 85630 Grasbrunn (DE); Trautenberg, Hans L., Dr., 85521 Ottobrunn (DE)
(74) Vertreter: Hummel, Adam

(57) **Zusammenfassung**

Die Erfindung betrifft ein Verfahren zur relativen Positions- und Zeitbestimmung für bewegte Objekte einer Konstellation umfassend die Schritte

Zeitgleiches Aussenden von Signalen durch die Objekte der Konstellation, wobei jedes Objekt ein für das Objekt eindeutiges Signal aussendet und

Senden der empfangenen Signale durch jedes Objekt der Konstellation an alle anderen Objekte der Konstellation nach einer vorgegebenen Wartezeit.

## Beschreibung

Die Erfindung betrifft ein Verfahren und eine Vorrichtung zur relativen Positions- und Zeitbestimmung für bewegte Objekte aufgrund von Ein- und Zweiwegmessungen.

Sollen Links zwischen Satelliten einer Konstellation für die Entfernungsmessung und damit zur Ortsbestimmung und Uhrensynchronisation verwendet werden, so müssen die Messergebnisse zwischen den Satelliten der Konstellation übertragen werden, wenn die Satelliten die Orbits und Uhren autonom schätzen sollen. Beispielsweise wird im GPS (Global Positioning System) ein Signal von einem Satelliten zu allen anderen Satelliten des Systems gesendet und in den empfangenden Satelliten die jeweilige Ankunftszeit der Signale bestimmt. Diese Messergebnisse werden in den jeweiligen empfangenden Satelliten digitalisiert und dann als numerischer Wert an den ursprünglich sendenden Satelliten zurück gesendet.

Diese Vorgehensweise hat den Nachteil, dass entweder relativ hohe Datenraten zur Übertragung der digitalisierten Messergebnisse erforderlich sind oder lange Zeitintervalle zwischen zwei aufeinander folgenden Bahn- oder Uhrenbestimmungen liegen.

Es ist eine Aufgabe der vorliegenden Erfindung ein Verfahren und eine Vorrichtung für die Bahn- und Uhrenbestimmung von Satelliten bereitzustellen, welches keine der obigen Nachteile hat.

Diese Aufgabe wird gelöst durch ein Verfahren nach Anspruch 1 und eine Vorrichtung nach Anspruch 8.

Ein Vorteil des erfindungsgemäßen Verfahrens ist es, dass auf diese Weise jeder Satellit der Konstellation eine Zweiwegemessung mit jedem Satelliten der Konstellation erhält, zu dem er direkt zurücksendet und zwei kombinierte Einwegemessungen über einen anderen Satelliten mit allen anderen Satelliten der Konstellation, ohne dass Messwerte als digitale Daten zwischen den Satelliten übertragen werden müssen. Es müssen keine Messwerte übertragen werden, weil aus dem Messungen am Satelliten selber und den festgelegten nominellen Absendezeitpunkten an den Satelliten, bzw. den festgelegten Wartezeiten bis zum Wiedersenden der empfangenen Signale, die zum Beginn einer jeden Messepoche von jedem Satelliten abgestrahlt werden, alle notwendigen Messdaten direkt am empfangenden Satelliten anfallen.

Es ist mit dem erfindungsgemäßen Verfahren somit nicht mehr notwendig digitalisierte Messdaten zu übertragen. Wenn aber keine Daten mehr übertragen werden müssen, kann mit einer viel geringeren Leistung gesendet werden bzw. bei gleicher Leistung mit einer viel besseren Genauigkeit gemessen werden.

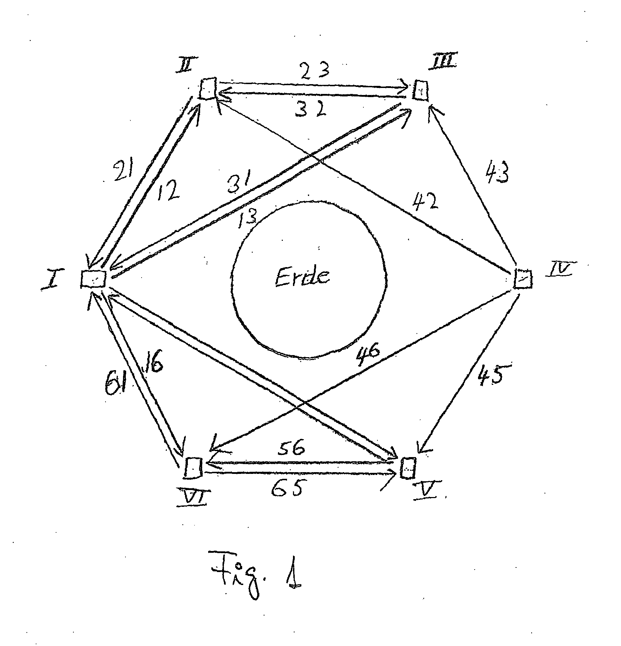

Figur 1 zeigt eine Satellitenkonstellation

Es folgt die Beschreibung einer Ausführungsform der vorliegenden Erfindung.

Alle Satelliten senden zeitgleich ein Signal (spreizcodekodiertes eindeutig jeden einzelnen Satelliten identifizierendes Signal) ab. Dadurch können alle Satelliten gleichzeitig an alle anderen Satelliten die Signale senden, indem sie Spreizcodes nutzen, die jeweils unterschiedlich und dem Empfänger bekannt sind. Mittels der dem Satelliten bekannten Spreizcodes der übrigen Satelliten kann der empfangende Satellit die Signale dekodieren und ermitteln, von welchem sendenden Satellit welches Signal gesendet wurde.

Diese Signale werden so kurz abgesendet, dass vor dem Ankommen dieser Signale bei irgendeinem Satelliten diese Signale schon deutlich beendet sind.

Deutlich beendet bedeutet in diesem Zusammenhang, dass die Bauteile, die zum Senden des Signals verwendet werden, bis zum Eintreffen des ersten Signals, das von einem anderen Sender zum Beginn einer Messepoche abgestrahlt wurde, nur noch so wenig Abstrahlen, dass ein Empfang der von anderen Sendern abgestrahlten Signale möglich ist. Diese maximale Sendezeit wird also durch den geringsten Abstand zwischen einem Sender und einem Empfänger, zwischen welchen die Entfernung bestimmt werden soll, bestimmt. In Satellitenkonstellation mit sich kreuzenden Bahnebenen, kann es also möglich sein, dass der Abstand zwischen manchen Satelliten mit direkten Ein- und Zweiwegmessungen aufgrund ihrer geringen Entfernung nicht bestimmt werden kann. Dann können nur indirekte Einwegmessungen über einen anderen Satelliten verwendet werden.

Mit anderen Worten, die Signaldauer wird so weit verkürzt, dass die maximale Signaldauer der beteiligten Signale, welche durch die Satelliten gesendet werden im wesentlichen kleiner ist als die minimale Laufzeit der beteiligten Signale innerhalb der beteiligten Satelliten.

Die Figur 1 zeigt die Situation in der ein Satellit I Zweiwegmessungen und direkte Einwegmessungen zu den Satelliten II, III, V und VI hat. Ferner hat der Satellit I indirekte Einwegmessungen vom Satelliten II über den Satelliten III, vom Satelliten III über den Satelliten II, vom Satelliten IV über den Satelliten III, vom Satelliten IV über den Satelliten 11, vom Satelliten IV über den Satelliten V, vom Satelliten IV über den Satelliten VI, vom Satelliten V über den Satelliten VI und vom Satelliten VI über den Satelliten V.

Diese Signale werden dann von allen Satelliten empfangen. Ein jeder Satellit sendet das empfangene nach einer für den individuellen Satelliten vorgegebenen Wartezeit wieder an alle anderen Satelliten ab. Die Wartezeit ist so bemessen, dass alle Satelliten immer nur die zurückgesendeten Signale von einem Satelliten empfangen können. Mit anderen Worten, die Wartezeit eines Satelliten ist so gewählt, dass in einem Zeitintervall zwischen der Wartezeit plus kürzester Laufzeit der Signale innerhalb der Satellitenkonstellation und der Wartezeit plus längster Laufzeit der Signale innerhalb der Satellitenkonstellation nur die zurückgesendeten Signale des einen Satelliten der Satellitenkonstellation unterwegs sind.

Das erfindungsgemäße Verfahren umfasst somit die Schritte eines zeitgleichen Aussendens von Signalen durch die Satelliten der Konstellation, wobei jeder Satellit ein für den Satellit eindeutiges Signal aussendet. Daraufhin werden die empfangenen Signale durch jeden Satellit der Konstellation nach einer vorgegebenen Wartezeit an alle anderen Satelliten der Konstellation gesendet. Ferner werden die empfangenen Signale, welche bereits einmal von einem anderen Satelliten der Konstellation empfangen und wiedergesendet wurden, an alle anderen Satelliten der Konstellation nach einer vorgegebenen Wartezeit gesendet.

Die Erfindung betrifft ferner eine Vorrichtung, welche für das erfindungsgemäße Verfahren eingerichtet ist.

Das erfindungsgemäße Verfahren und die erfindungsgemäße Vorrichtung wurde anhand einer Satellitenkonstellation beschrieben. Dies ist allerdings nur ein Beispiel. Die Erfindung ist für alle Konstellationen geeignet in denen relative Positions- und Zeitbestimmungen für bewegte Objekte aufgrund von Ein- und Zweiwegmessungen vorgenommen werden können.

## Patentansprüche

1. Verfahren zur relativen Positions- und Zeitbestimmung für bewegte Objekte einer Konstellation umfassend die Schritte
Zeitgleiches Aussenden von Signalen durch die Objekte der Konstellation, wobei jedes Objekt ein für das Objekt eindeutiges Signal aussendet und
Senden der empfangenen Signale durch jedes Objekt der Konstellation an alle anderen Objekte der Konstellation nach einer vorgegebenen Wartezeit.

2. Verfahren nach Anspruch 1, **dadurch gekennzeichnet, dass** es ferner den folgenden Schritt umfasst:
Senden der empfangenen Signale, welche bereits einmal von einem anderen Objekt der Konstellation empfangen und wiedergesendet wurden, an alle anderen Objekte der Konstellation nach einer vorgegebenen Wartezeit.

3. Verfahren nach Anspruch 1 oder 2, **dadurch gekennzeichnet, dass** die Wartezeit individuell für jedes Objekt vorgegeben ist.

4. Verfahren nach einem der Ansprüche 1 bis 3,
**dadurch gekennzeichnet, dass** die Wartezeit so bemessen ist, dass alle Objekte der Konstellation immer nur die zurückgesendeten Signale von einem Objekt empfangen können.

5. Verfahren nach einem der Ansprüche 1 bis 4, **dadurch gekennzeichnet, dass** die Eindeutigkeit des Signals durch eine Spreizkodekodierung erreicht wird.

6. Verfahren nach einem der Ansprüche 1 bis 5, **dadurch gekennzeichnet, dass** die Signaldauer der gesendeten Signale so kurz abgesendet ist, dass vor dem Ankommen dieses Signals bei irgendeinem Objekt der Konstellation dieses Senden schon deutlich beendet ist.

7. Verfahren nach einem der Ansprüche 1 bis 6, **dadurch gekennzeichnet, dass** die Objekte der Konstellation Satelliten einer Satellitenkonstellation sind.

8. Vorrichtung eingerichtet zur Durchführung eines Verfahrens nach einem der Ansprüche 1 bis 7.
